# EUROPEAN PATENT APPLICATION

(11) **EP 3 647 917 A1**
(43) Date of publication of application: **06.05.2020**
(21) Application number: 19205637.2
(22) Date of filing: 28.10.2019
(51) Int. Cl.: G06F 3/0354

(54) **ELECTRONIC WHITEBOARD SYSTEM AND OPERATION METHOD**

(30) Priority: 31.10.2018 CN 201811283657
(71) Applicant: Coretronic Corporation, Hsin-Chu 300 (TW)
(72) Inventor: YIN, Nan-Jiun, Hsinchu 300 (TW); KUO, Pen-Ning, Hsinchu 300 (TW)
(74) Representative: Ter Meer Steinmeister & Partner

(57) **Abstract**

The disclosure provides an electronic whiteboard system and an operation method. The electronic whiteboard system includes an electronic whiteboard, an electronic device, and a first writing device. The electronic whiteboard has a capacitive touch function. The electronic device is coupled to the electronic whiteboard and includes a display. The first writing device includes a first contact surface. The electronic whiteboard receives a first touch input of the first contact surface and generates a first signal strength corresponding to the first touch input. The electronic device displays the first touch input on the display in a first color corresponding to the first signal strength. The electronic whiteboard system and the operation method of the disclosure can display the color corresponding to the signal strength of the touch input on the display of the electronic whiteboard system.

## Description

This application claims the priority CN 201811283657.8, filed on October 31, 2018.

### BACKGROUND OF THE DISCLOSURE

### Field of the Disclosure

The disclosure relates to an electronic whiteboard system and an operation method, and more particularly to an electronic whiteboard system and an operation method for displaying colors according to signal strength.

### Description of Related Art

Markers and erasers are used as tools for writing and erasing on conventional whiteboard to carry out discussion and teaching. However, the teaching system using the conventional whiteboard has disadvantages such as the inability to digitize and it is difficult to store and share the information. Therefore, in recent years, the development and application of electronic whiteboard products have gradually become popular. Currently, there are electronic whiteboard systems that can realize the function of forming a physical handwriting on the electronic whiteboard and simultaneously displaying a digital handwriting on a display of an electronic device that is connected with the electronic whiteboard. However, in current electronic whiteboard systems, the electronic device connected to the electronic whiteboard cannot display the digital handwriting on the display in the color corresponding to the physical handwriting on the electronic whiteboard. In that case, even if a plurality of users respectively form a plurality of physical handwritings in different colors on the electronic whiteboard, the plurality of digital handwritings corresponding to the plurality of physical handwritings and displayed on the display of the electronic device still appear to be the same color. On this occasion, the viewer who can only see the display of the electronic device may not be able to recognize the digital handwriting input by different users. Therefore, there is a need for a technology that can solve the aforementioned problem.

The disclosed in this BACKGROUND section is only for enhancement of understanding of the BACKGROUND section of the described technology and therefore it may contain information that does not form the prior art that is already known to a person of ordinary skill in the art. Further, the information disclosed in the BACKGROUND section does not mean that one or more problems to be resolved by one or more embodiments of the disclosure were acknowledged by a person of ordinary skill in the art.

### SUMMARY OF THE DISCLOSURE

The disclosure provides an electronic whiteboard system and an operation method for displaying a color corresponding to a signal strength of a touch input on a display of the electronic whiteboard system.

The objectives and advantages of the disclosure may be further understood in the technical features disclosed in the disclosure.

The object is solved by the features of the independent claims. Preferred embodiments are given in the dependent claims.

To achieve one or a part or all the objectives or other objectives, an embodiment of the disclosure provides an electronic whiteboard system including an electronic whiteboard, an electronic device, and a first writing device. The electronic whiteboard has a capacitive touch function. The electronic device is coupled to the electronic whiteboard and includes a display. The first writing device includes a first contact surface. The electronic whiteboard receives a first touch input of the first contact surface and generates a first signal strength corresponding to the first touch input. The electronic device displays the first touch input on the display in a first color corresponding to the first signal strength.

Preferably, the electronic whiteboard system may further comprise a second writing device, comprising a second contact surface.

Preferably, the electronic whiteboard is configured to receive a second touch input of the second contact surface and to generate a second signal strength corresponding to the second touch input.

Preferably, the electronic device is configured to display the second touch input on the display in a second color corresponding to the second signal strength.

Preferably, a first contact area of the first contact surface on the electronic whiteboard may be greater than a second contact area of the second contact surface on the electronic whiteboard.

Preferably, the first signal strength may be greater than the second signal strength.

Preferably, the first contact surface may contact the electronic whiteboard to generate a first capacitance value corresponding to the first contact area.

Preferably, the first capacitance value correspondingly may be configured to generate the first signal strength.

Preferably, the second contact surface may contact the electronic whiteboard to generate a second capacitance value corresponding to the second contact area.

Preferably, the second capacitance value correspondingly may be configured to generate the second signal strength.

Preferably, the first capacitance value may be greater than the second capacitance value.

Preferably, the first capacitance value may fall within a first capacitance strength interval.

Preferably, the second capacitance value may fall within a second capacitance strength interval.

Preferably, the first capacitance strength interval may not overlap the second capacitance strength interval.

Preferably, the first signal strength may fall within a first signal strength interval, the second signal strength may fall within a second signal strength interval, and the first signal strength interval may not overlap the second signal strength interval.

Preferably, the electronic device may further comprise a processor and a storage device connected to each other.

Preferably, the storage device may include a color correspondence table.

Preferably, the electronic device may determine, by the processor, the first color corresponding to the first signal strength and the second color corresponding to the second signal strength according to the color correspondence table.

Preferably, the storage device may further have or store a learning program.

Preferably, the processor may be configured to utilize the learning program to calculate a conversion parameter according to a plurality of influence factors or historical determining results.

Preferably, the electronic device may determine, by the processor, the first color corresponding to the first signal strength and the second color corresponding to the second signal strength according to the color correspondence table and the conversion parameter.

Preferably, the electronic whiteboard may comprise a capacitive touch sensing array to sense the first touch input and the second touch input.

Preferably, the electronic whiteboard may generate a first capacitance value corresponding to the first touch input and a second capacitance value corresponding to the second touch input, the first capacitance value may correspondingly generate the first signal strength, and the second capacitance value correspondingly generates the second signal strength.

Preferably, the first color may be different from the second color.

Preferably, the electronic whiteboard may generate a first coordinate information corresponding to the first touch input when receiving the first touch input of the first contact surface.

Preferably, the electronic whiteboard may generate a second coordinate information corresponding to the second touch input when receiving the second touch input of the second contact surface.

Preferably, the electronic whiteboard may be configured to sequentially receive a plurality of continuous third touch inputs of the first contact surface, and to generate a plurality of third signal strengths corresponding to the plurality of third touch inputs.

Preferably, the electronic device may further comprise a processor and a storage device connected to each other.

Preferably, the storage device may have a confidence level calculating program, the processor utilizes the confidence level calculating program and calculates a plurality of continuous confidence levels corresponding to the plurality of third signal strengths and corresponding to the plurality of third touch inputs according to the plurality of third signal strengths.

Preferably, the electronic device may be configured to determine the plurality of confidence levels corresponding to the plurality of third signal strengths according to a first signal strength interval corresponding to the first color and a second signal strength interval corresponding to the second color.

Preferably, when one of the plurality of confidence levels is greater than a threshold, the electronic device may display one of the plurality of third touch inputs corresponding to the one of the plurality of confidence levels on the display in the first color or the second color.

Preferably, when one of the plurality of confidence levels is not greater than the threshold, the electronic device may display one of the plurality of third touch inputs corresponding to the one of the plurality of confidence levels on the display in a third color different from the first color and the second color.

Preferably, the electronic whiteboard may receive a fourth touch input after the plurality of third touch inputs and may generate a fourth signal strength corresponding to the fourth touch input.

Preferably, the processor may utilize the confidence level calculating program and calculates an index confidence level corresponding to the fourth signal strength and corresponding to the plurality of fourth touch inputs according to the fourth signal strength.

Preferably, when the electronic device displays the plurality of third touch inputs corresponding to the plurality of confidence levels on the display in the third color, and the index confidence level corresponding to the fourth signal strength is greater than the threshold, the electronic device may display the fourth touch input corresponding to the index confidence level on the display in the first color or the second color.

Preferably, the electronic device may modify the third color of the plurality of third touch inputs displayed on the display into the same color as the color of the fourth touch input displayed on the display.

Preferably, the first writing device may comprise a first conductive pen barrel.

Preferably, the first conductive pen barrel may contain a first conductive ink.

Preferably, the first conductive ink may be electrically connected to the first conductive pen barrel.

Preferably, the first conductive pen barrel may have a first electrical conductivity coefficient, the first conductive ink may have a second electrical conductivity coefficient.

Preferably, the second writing device may comprise a second conductive pen barrel.

Preferably, the second conductive pen barrel may contain a second conductive ink.

Preferably, the second conductive ink may be electrically connected to the second conductive pen barrel.

Preferably, the second conductive pen barrel may have a third electrical conductivity coefficient.

Preferably, the second conductive ink may have a fourth electrical conductivity coefficient.

Preferably, the first contact surface may contact the electronic whiteboard to generate a first capacitance value corresponding to the first contact area, the first electrical conductivity coefficient and the second electrical conductivity coefficient.

Preferably, the first capacitance value correspondingly may generate the first signal strength.

Preferably, the second contact surface may contact the electronic whiteboard to correspondingly generate a second capacitance value corresponding to the second contact area, the third electrical conductivity coefficient and the fourth electrical conductivity coefficient.

Preferably, the second capacitance value correspondingly may generate the second signal strength.

Preferably, the first capacitance value may be greater than the second capacitance value.

To achieve one or a part or all the objectives or other objectives, an embodiment of the disclosure provides an operation method for an electronic whiteboard, an electronic device, and a first writing device. The electronic whiteboard has a capacitive touch function. The electronic device is coupled to the electronic whiteboard and includes a display. The first writing device includes a first contact surface. The operation method includes: receiving, by the electronic whiteboard, the first touch input of the first contact surface and generating a first signal strength corresponding to the first touch input; and displaying, by the electronic device, the first touch input on the display in the first color corresponding to the first signal strength.

Preferably, the operation method may further comprise receiving, by the electronic whiteboard, a second touch input of a second contact surface of a second writing device and generating a second signal strength corresponding to the second touch input; and displaying, by the electronic device, the second touch input on the display in a second color corresponding to the second signal strength.

Preferably, a first contact area of the first contact surface on the electronic whiteboard may be greater than a second contact area of the second contact surface on the electronic whiteboard.

Preferably, the first signal strength may be greater than the second signal strength.

Preferably, the step of receiving, by the electronic whiteboard, the first touch input of the first contact surface and generating the first signal strength corresponding to the first touch input may comprise: contacting the electronic whiteboard through the first contact surface to generate a first capacitance value corresponding to the first contact area, the first capacitance value correspondingly generates the first signal strength.

Preferably, the step of receiving, by the electronic whiteboard, the second touch input of the second contact surface and generating the second signal strength corresponding to the second touch input may comprise contacting the electronic whiteboard through the second contact surface to generate a second capacitance value corresponding to the second contact area, the second capacitance value correspondingly generates the second signal strength, and the first capacitance value is greater than the second capacitance value.

Preferably, the first capacitance value is in a first capacitance strength interval, the second capacitance value is in a second capacitance strength interval, and the first capacitance strength interval does not overlap the second capacitance strength interval.

Preferably, the first signal strength may be in a first signal strength interval, the second signal strength may be in a second signal strength interval, and the first signal strength interval may not overlap the second signal strength interval.

Preferably, the step of displaying, by the electronic device, the first touch input on the display in the first color corresponding to the first signal strength may comprise: determining, by the electronic device, the first color corresponding to the first signal strength according to a color correspondence table; and the step of displaying, by the electronic device, the second touch input on the display in the second color corresponding to the second signal strength comprises: determining, by the electronic device, the second color corresponding to the second signal strength according to the color correspondence table.

Preferably, the operation method may further comprise utilizing a learning program and calculating a conversion parameter according to a plurality of influence factors or historical determining results.

Preferably, the electronic device may determine the first color corresponding to the first signal strength and the second color corresponding to the second signal strength according to the color correspondence table and the conversion parameter.

Preferably, the electronic whiteboard may comprise a capacitive touch sensing array, and in the operation method the step of receiving, by the electronic whiteboard, the first touch input of the first contact surface and generating the first signal strength corresponding to the first touch input may comprise: sensing the first touch input through the capacitive touch sensing array to correspondingly generate a first capacitance value corresponding to the first touch input, and the first capacitance value correspondingly generates the first signal strength.

Preferably, the step of receiving, by the electronic whiteboard, the second touch input of the second contact surface and generating the second signal strength corresponding to the second touch input may comprise: sensing the second touch input through the capacitive touch sensing array to correspondingly generate a second capacitance value corresponding to the second touch input, and the second capacitance value correspondingly generates the second signal strength.

Preferably, the first color may be different from the second color.

Preferably, the electronic whiteboard may receive the first touch input of the first contact surface and may generate a first coordinate information corresponding to the first touch input.

Preferably, the electronic whiteboard may generate a second coordinate information corresponding to the second touch input when receiving the second touch input of the second contact surface.

Preferably, the operation method may further comprise receiving, by the electronic whiteboard, a plurality of continuous third touch inputs of the first contact surface in sequence, and generating a plurality of third signal strengths corresponding to the plurality of third touch inputs; and utilizing a confidence level calculating program to calculate a plurality of continuous confidence levels corresponding to the plurality of third signal strengths and corresponding to the plurality of third touch inputs according to the plurality of third signal strengths.

Preferably, the operation method may further comprise determining, by the electronic device, the plurality of confidence levels corresponding to the plurality of third signal strengths according to a first signal strength interval corresponding to the first color and a second signal strength interval corresponding to the second color.

Preferably, when one of the plurality of confidence levels is greater than a threshold, the operation method may further comprise displaying one of the plurality of third touch inputs corresponding to the one of the plurality of confidence levels by the electronic device on the display in the first color or the second color.

Preferably, when one of the plurality of confidence levels is not greater than the threshold, the operation method may further comprise displaying one of the plurality of third touch inputs corresponding to the one of the plurality of confidence levels by the electronic device on the display in a third color different from the first color and the second color.

Preferably, the operation method may further comprise receiving, by the electronic whiteboard, the fourth touch input after the plurality of third touch inputs and generating a fourth signal strength corresponding to the fourth touch input, and utilizing the confidence level calculating program to calculate an index confidence level corresponding to the fourth signal strength and corresponding to the plurality of fourth touch inputs according to the fourth signal strength; and

Preferably, the operation method may further comprise when the electronic device displays the plurality of third touch inputs corresponding to the plurality of confidence levels on the display in the third color, and the index confidence level corresponding to the fourth signal strength is greater than the threshold, displaying the fourth touch input corresponding to the index confidence level by the electronic device on the display in the first color or the second color, and modifying the third color of the plurality of third touch inputs displayed on the display by the electronic device into the same color as the color of the fourth touch input displayed on the display.

Preferably, the first writing device may comprise a first conductive pen barrel, the first conductive pen barrel may contain a first conductive ink, the first conductive ink may be electrically connected to the first conductive pen barrel, the first conductive pen barrel may have a first electrical conductivity coefficient, the first conductive ink may have a second electrical conductivity coefficient, the second writing device comprises a second conductive pen barrel, the second conductive pen barrel may contain a second conductive ink, the second conductive ink may be electrically connected to the second conductive pen barrel, the second conductive pen barrel may have a third electrical conductivity coefficient, the second conductive ink may have a fourth electrical conductivity coefficient.

Preferably, the operation method may further comprise the step of receiving, by the electronic whiteboard, the first touch input of the first contact surface and generating the first signal strength corresponding to the first touch input may comprise: contacting the electronic whiteboard through the first contact surface to generate a first capacitance value corresponding to the first contact area, the first electrical conductivity coefficient, and the second electrical conductivity coefficient, the first capacitance value correspondingly generates the first signal strength.

Preferably, the operation method may further comprise the step of receiving, by the electronic whiteboard, the second touch input of the second contact surface and generating the second signal strength corresponding to the second touch input may comprise contacting the electronic whiteboard through the second contact surface and generating a second capacitance value corresponding to the second contact area, the third electrical conductivity coefficient and the fourth electrical conductivity coefficient, the second capacitance value correspondingly generates the second signal strength, and the first capacitance value is greater than the second capacitance value.

Based on the above, the electronic whiteboard system and the operation method of the disclosure receive the touch input of the contact surface of the writing device by the electronic whiteboard and generate the signal strength corresponding to the touch input, and then display the color corresponding to the signal strength on the display by the electronic device. In this manner, in the case of using a plurality of different writing devices, it is possible to achieve the effect of recognizing the touch input of different writing devices on the display.

Other objectives, features and advantages of the invention will be further understood from the further technological features disclosed by the embodiments of the invention wherein there are shown and described preferred embodiments of this invention, simply by way of illustration of modes best suited to carry out the invention.

In order to make the aforementioned features and advantages of the disclosure more comprehensible, embodiments accompanying figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A is a block diagram of an electronic whiteboard system according to an embodiment of the disclosure.
FIG. 1B is a schematic partial side view of a writing device and an electronic whiteboard in the electronic whiteboard system of FIG. 1A.
FIG. 2 is a schematic view of a writing device according to an embodiment of the disclosure.
FIG. 3 is a flow chart of an operation method according to an embodiment of the disclosure.
FIG. 4 is a flow chart of an operation method according to another embodiment of the disclosure.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

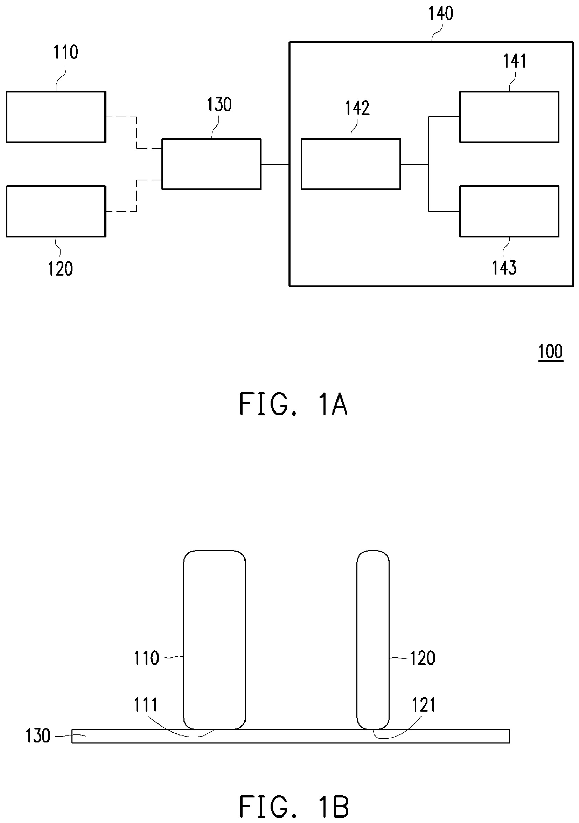

FIG. 1A is a block diagram of an electronic whiteboard system according to an embodiment of the disclosure. Referring to FIG. 1A, an electronic whiteboard system 100 according to an embodiment of the disclosure includes a first writing device 110, a second writing device 120, an electronic whiteboard 130, and an electronic device 140 coupled to the electronic whiteboard. The first writing device 110 and the second writing device 120 are, for example, an ink pen including a conductive pen barrel containing conductive ink and a pen tip, a stylus including a conductive pen barrel and a pen tip or a finger. The electronic whiteboard 130 has a capacitive touch function by means of, for example, a Projected Capacitive Touch (PCT) technique, and senses the touch input through a capacitive touch sensing array formed by multiple transmitting (Tx) signal lines and receiving (Rx) signal lines perpendicularly interlacing each other. The electronic device 140 is, for example, a desktop computer, a notebook computer, or other device that can generate images and receive information input by user. The electronic whiteboard 130 may be coupled to the electronic device 140 by means of wired communication or wireless communication. The electronic device 140 includes a display 141, a storage device 143, and a processor 142 coupled to the display 141 and the storage device 143. The storage device 143 may be, for example, any type of fixed or movable random access memory (RAM), a read-only memory (ROM), a flash memory, or the like or a combination of the above elements. The storage device 143 is configured to store a plurality of modules and related data, such as applications. The processor 142 may be at least one of, for example, a central processing unit (CPU), or other programmable general-purpose or specific-purpose microprocessor, a digital signal processor (DSP), a programmable controller, an application specific integrated circuit (ASIC), a programmable logic device (PLD), and the like. In addition, the processor 142 and the storage device 143 may be different components respectively or may be integrated into the same component, and the disclosure is not limited thereto.

Referring to FIG. 1B, FIG. 1B is a schematic partial side view of the first writing device 110, the second writing device 120, and the electronic whiteboard 130 in the electronic whiteboard system 100 of FIG. 1A. As shown in FIG. 1B, in an embodiment, the first writing device 110 and the second writing device 120 are writing devices of different sizes. Specifically, the first writing device 110 includes a first contact surface 111, and the second writing device 120 includes a second contact surface 121. The first writing device 110 contacts the electronic whiteboard 130 through the first contact surface 111, and the second writing device 120 contacts the electronic whiteboard 130 through the second contact surface 121, and the first contact surface 111 forms a first contact area (not shown) on the electronic whiteboard 130, the second contact surface 121 forms a second contact area (not shown) on the electronic whiteboard 130; the first contact area and the second contact area are different in size. If the first writing device 110 and the second writing device 120 are the ink pen or the stylus, the pen tip may be used as a contact surface to perform touch input on the electronic whiteboard 130. If the first writing device 110 and the second writing device 120 are fingers, the skin of the finger may be used as a contact surface to perform touch input on the electronic whiteboard 130.

In an embodiment, the electronic whiteboard 130 may receive the first touch input of the first contact surface 111 of the first writing device 110 and generate a first signal strength corresponding to the first touch input. Next, the electronic device 140 displays the first touch input on the display 141 in a first color corresponding to the first signal strength. Similarly, the electronic whiteboard 130 may further receive the second touch input of the second contact surface 121 of the second writing device 120 and generate a second signal strength corresponding to the second touch input. Next, the electronic device 140 displays the second touch input on the display 141 in a second color corresponding to the second signal strength. In this embodiment, as shown in FIG. 1B , the first contact area of the first contact surface 111 on the electronic whiteboard 130 is greater than the second contact area of the second contact surface 121 on the electronic whiteboard 130. The greater the contact area between the writing device and the electronic whiteboard 130, the stronger the signal strength is generated. Therefore, the first signal strength generated by the first touch input is greater than the second signal strength generated by the second touch input.

Specifically, the writing device (for example, the first writing device 110 or the second writing device 120) contacts the electronic whiteboard 130 through its contact surface (for example, the first contact surface 111 or the second contact surface 121), and the contact surface forms a contact area on the electronic whiteboard 130, and a capacitance value corresponding to the contact area is generated after the writing device comes into contact with the electronic whiteboard 130. This capacitance value is converted by the circuit of the electronic whiteboard 130 to form an electrical signal, and then the electrical signal is transmitted to the electronic device 140. Therefore, the first contact surface 111 of the first writing device 110 can generate a first capacitance value corresponding to the first contact area after contacting the electronic whiteboard 130 and the first capacitance value correspondingly generates or represents the first signal strength, and the second contact surface 121 of the second writing device 120 can generate a second capacitance value corresponding to the second contact area after contacting the electronic whiteboard 130 and the second capacitance value correspondingly generates the second signal strength. Since the first contact area is larger than the second contact area, the first capacitance value is greater than the second capacitance value, and thus the first signal strength is greater than the second signal strength. Furthermore, the electronic whiteboard 130 senses the first touch input and the second touch input by using the capacitive touch sensing array, and generates the first capacitance value corresponding to the first touch input and the second capacitance value corresponding to the second touch input. In addition, the electronic whiteboard 130 generates a first coordinate information corresponding to the first touch input when receiving the first touch input of the first contact surface 111, and the electronic whiteboard 130 generates a second coordinate information corresponding to the second touch input when receiving the second touch input of the second contact surface 121. Therefore, the electronic whiteboard 130 further transmits the coordinate information corresponding to the touch input to the electronic device 140, such that the electronic device 140 can display the coordinate information on the display 141 in a specific color.

In an embodiment, the first capacitance value may fall within the first capacitance strength interval, and the second capacitance value may fall within a second capacitance strength interval. In order to distinguish the first writing device 110 from the second writing device 120, the first capacitance strength interval and the second capacitance strength interval do not overlap each other. Similarly, the first signal strength may fall within the first signal strength interval and the second signal strength may fall within the second signal strength interval. In order to distinguish the first writing device 110 from the second writing device 120, the first signal strength interval and the second signal strength interval do not overlap each other.

In an embodiment, the storage device 143 of the electronic device 140 may have a color correspondence table. Specifically, the color correspondence table is stored in the application of the storage device 143, and the color correspondence table records colors corresponding to respective signal strengths. After receiving the electrical signal transmitted from the electronic whiteboard 130, the electronic device 140 may determine the color corresponding to the signal strength of the electrical signal through the processor 142 according to the color correspondence table, for example, determine the first color corresponding to the first signal strength and the second color corresponding to the second signal strength. In addition, the first color is different from the second color to achieve the purpose of differentiating the first touch input from the second touch input displayed on the display 141.

In an embodiment, the storage device 143 of the electronic device 140 may have a learning program. The processor 142 may calculate the conversion parameter according to the plurality of influence factors or the historical determining result by using the learning program, and then determine the first color corresponding to the first signal strength and the second color corresponding to the second signal strength according to the color correspondence table and the conversion parameter. For example, the influence factor may include that identical contact area might have slight signal strength differences in different areas of the electronic whiteboard 130, or, if the writing device is an ink pen with conductive ink, and the conductive ink will gradually decrease after use, since the amount of conductive ink in the ink pen also affects the signal, as time passes and the conductive ink is reduced after use, the signal strength is decreased. In addition, a color determining database may be established according to historical determining result, and the conversion parameter may also be calculated through comparison between the preset determining data and the historical determining result. By using the machine learning method, it is possible to adapt to the change of the signal strength generated by the same writing device, and convert the signal strength through the conversion parameter to achieve the effect of calibrating the signal strength, such that the converted signal strength is not misjudged as the signal strength generated by other writing device.

In an embodiment, the storage device 143 of the electronic device 140 may have a confidence level calculating program. When the electronic whiteboard 130 sequentially receives a plurality of continuous touch inputs of a contact surface (for example, the first contact surface 111 or the second contact surface 121) of the writing device (for example, the first writing device 110 or the second writing device 120), the electronic whiteboard 130 generates a plurality of signal strengths corresponding to the touch inputs. The processor 142 may utilize the confidence level calculating program to calculate a plurality of continuous confidence levels corresponding to the plurality of signal strengths and corresponding to the plurality of touch inputs according to the plurality of signal strengths.

For example, when the signal strength corresponding to one touch input falls outside the first signal strength interval corresponding to the first writing device 110 and the second signal strength interval corresponding to the second writing device 120, the processor 142 may determine that the confidence level of the signal strength is less than the threshold. When the signal strength corresponding to the touch input moves closer to the first signal strength interval or the second signal strength interval, the confidence level may be gradually increased. Until the signal strength corresponding to the touch input finally falls within the first signal strength interval or the second signal strength interval, the processor 142 may determine that the confidence level of the signal strength is greater than the threshold. That is to say, the confidence level may be related to the difference between the signal strength corresponding to the touch input and the first signal strength interval or the second signal strength interval. Therefore, the electronic device 140 determines the confidence level according to the first signal strength interval corresponding to the first color and the second signal strength interval corresponding to the second color. When the confidence level is greater than the threshold, the electronic device 140 displays the touch input corresponding to the confidence level on the display 141 in the first color or the second color, and when the confidence level is not greater than the threshold, the electronic device 140 displays the touch input corresponding to the confidence level on the display in a third color different from the first color and the second color.

In an embodiment, the processor 142 may also pre-process these signal strengths prior to calculating the confidence level of multiple continuous signal strengths. In an embodiment, the processor 142 may calculate a moving average signal strength corresponding to each signal strength. For example, when the processor 142 receives the continuous signal strength {S1, S2, S3, S4, S5}, the processor 142 may first calculate the corresponding moving average signal strength {S1, (S1+S2)/2, (S1+S2+S3)/3, (S2+S3+S4)/3, (S3+S4+S5)/3}, and then calculate the confidence level of these signal strengths. In another embodiment, the processor 142 may also low pass filter the continuous signal strength to filter data with excessively variable values. In another embodiment, the processor 142 may also set different weights for different signal strengths. For example, the signal strength may be in an unstable state when the writing device just contacts the electronic whiteboard 130 or before the writing device leaves the electronic whiteboard 130. Therefore, the processor 142 may add a specific weight to several specific signal strengths to reduce the misjudgment of the writing device in the process of contacting the electronic whiteboard 130.

In an embodiment, when the confidence level of the signal strength corresponding to the plurality of continuous touch inputs (for example, the plurality of continuous third touch inputs) is less than the threshold, the touch inputs are displayed on the display 141 in the third color. However, when the confidence level (e.g., the index confidence level) of the signal strength corresponding to the next touch input (e.g., the fourth touch input) is greater than the threshold, the fourth touch input is displayed on the display 141 in the first color or the second color, and the third color of the plurality of previous touch inputs displayed on the display 141 is modified to be the same color as the color of the fourth touch input displayed on the display 141. For example, the preset color of the first writing device 110 is blue. When the first writing device 110 starts to come into contact with the electronic whiteboard 130, it might be that the signal strength is still unstable, the confidence level at this time might be less than the threshold, and the initial handwriting may be displayed on the display 141 in a neutral color (for example, gray). After a period of time, when the signal strength becomes stable and the confidence level is greater than the threshold, the subsequent handwriting of the same stroke is displayed in blue color on the display 141 and the previous initial handwriting in gray color of the same stroke is modified to blue color.

Although the above embodiment explains that different colors are displayed depending on the contact areas of the two writing devices on the electronic whiteboard 130, the disclosure provides no limitation to the number of writing devices. In another embodiment, the electronic whiteboard system 100 may include only one writing device. If the writing device is an ink pen with conductive ink, the color of the physical handwriting (which may be regarded as a touch input) of the ink pen (i.e., writing device) written on the electronic whiteboard 130 may be the same as the color of the digital handwriting presented on the display 141 through the corresponding mechanism of contact area and color. In still another embodiment, different colors may be displayed depending on the contact area of the three or more writing devices on the electronic whiteboard 130. As long as the signal strength generated by the touch input of each writing device is in different signal strength intervals, the electronic device 140 can display the touch input of different writing devices on the display 141 in different colors corresponding to different signal strength intervals, thereby achieving the function of differentiating the touch inputs of different writing devices on the display 141.

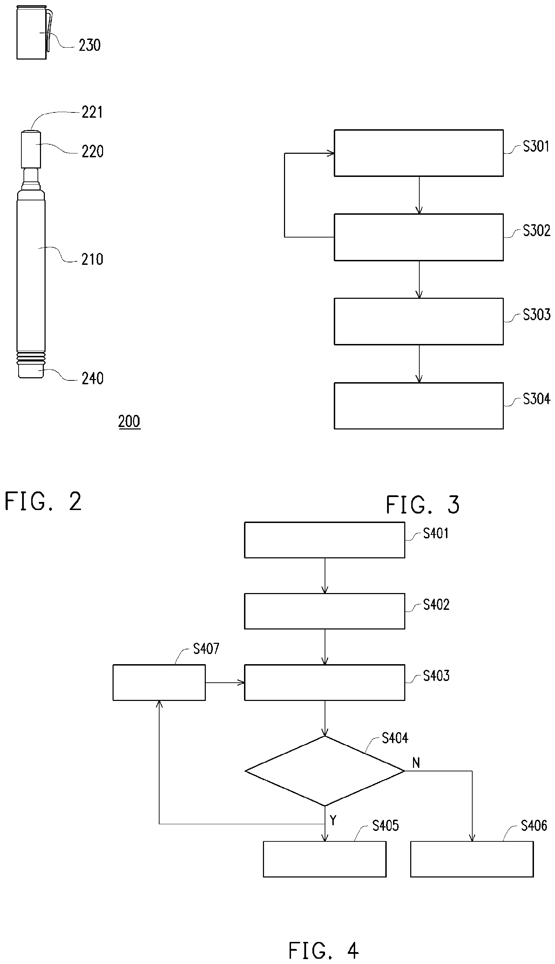

FIG. 2 is a schematic view of a writing device according to an embodiment of the disclosure. The writing device 200 is used for an electronic whiteboard having a capacitive touch function, and the writing device 200 includes a conductive pen barrel 210, a pen tip 220, and conductive ink contained in the conductive pen barrel 210. For example, the first writing device 110 and the second writing device 120 in the embodiments of FIG. 1A and FIG. 1B may be, for example, the writing device 200, but the disclosure is not limited thereto, that is, the writing device 200 may be applied to the electronic whiteboard system 100 in FIG. 1A.

An electrical conductivity coefficient (i.e. resistivity, and Ω·m is taken as a measuring unit) of the conductive ink in the conductive pen barrel 210 is, for example, 0 Ω·m-35 KΩ·m. A material of the conductive ink, for example, includes a volatile organic solvent and a colorant, where the volatile organic solvent is, for example, ethyl alcohol, and the colorant is, for example, a pigment or a dye, which contains a compound that is soluble in water and makes the water solution conductive, for example, a trace salt (for example, NaCl, C₆H₈O₇(citric acid)), granulated sugar, etc. Generally, by adjusting a ratio between the volatile organic solvent and the colorant, the electrical conductivity coefficient of the conductive ink is set, so as to achieve an effect that the electronic whiteboard 130 may generate a signal.

At least a part of an outside surface of the conductive pen barrel 210 in contact with a user is a conductor. In an embodiment, the conductive pen barrel 210 may include a conductive paint or a conductive sticker located on the surface thereof, so as to improve electrical conductivity and aesthetics of the whole writing device 200.

The conductive ink is electrically connected to the conductive pen barrel 210. The user is electrically connected to the conductive ink through the conductive pen barrel 210. Referring to FIG. 1A and FIG. 1B, the pen tip 220 is configured to output the conductive ink to the electronic whiteboard 130 through a contact surface 221 to form a physical handwriting on the electronic whiteboard 130. When the contact surface 221 of the pen tip 220 contacts the electronic whiteboard 130, the physical handwriting is formed on the electronic whiteboard 130, and a position on the electronic whiteboard 130 contacting the contact surface 221 of the pen tip 220 has a capacitance variation to generate a signal. An electrical conductivity coefficient of the conductive pen barrel 210 and the electrical conductivity coefficient of the conductive ink may influence a signal strength of the signal generated by the electronic whiteboard 130 when the contact surface 221 of the pen tip 220 contacts the electronic whiteboard 130.

The pen tip 220 is connected to the conductive pen barrel 210. A material of the pen tip 220 may be a material of a pen tip of a general ink pen, which may include a cotton core or other similar material. In an embodiment, the pen tip 220 includes a non-conductor. When the contact surface 221 of the pen tip 120 contacts the electronic whiteboard 130, the electronic whiteboard 130 is electrically connected to the conductive pen barrel 210 through the conductive ink. In an embodiment, the pen tip 220 includes a conductor, and an electrical conductivity coefficient of the pen tip 220 may influence the signal strength of the signal generated by the electronic whiteboard 130 when the contact surface 221 of the pen tip 220 contacts the electronic whiteboard 130. In an embodiment, an ink absorption amount, a shape and a size of the pen tip 220 may also influence the signal strength of the signal generated by the electronic whiteboard 130 when the contact surface 221 of the pen tip 220 contacts the electronic whiteboard 130. Further, the shape and the size of the pen tip 220 may influence a contact area between the contact surface 221 of the pen tip 220 and the electronic whiteboard 130, and the contact area between the contact surface 221 of the pen tip 220 and the electronic whiteboard 130 may influence the signal strength of the signal generated by the electronic whiteboard 130 when the contact surface 221 of the pen tip 220 contacts the electronic whiteboard 130. Therefore, the shape and the size of the pen tip 220 may influence the signal strength of the signal generated by the electronic whiteboard 130 when the contact surface 221 of the pen tip 220 contacts the electronic whiteboard 130. For example, in the embodiments of FIG. 1A and FIG. 1B, the first writing device 110 and the second writing device 120 are different in size, and the first contact area of the first contact surface 111 of the first writing device 110 formed on the electronic whiteboard 130 has a different size as compared to the second contact area of the second contact surface 121 of the second writing device 120 formed on the electronic whiteboard 130. As a result, when the first writing device 110 and the second writing device 120 contact the electronic whiteboard 130, the electronic whiteboard 130 generates signals with different signal strengths. In an embodiment, the pen tip 220 is, for example, detachable, and is adapted to be combined with or separated from the conductive pen barrel 210.

Further, the contact area of the contact surface 221 of the pen tip 220 on the electronic whiteboard 130, the electrical conductivity coefficient of the conductive pen barrel 210, and the electrical conductivity coefficient of the conductive ink influence the capacitance value and the signal strength of the signal generated by the electronic whiteboard 130 when the contact surface 221 of the pen tip 220 contacts the electronic whiteboard 130, and different types of writing device 200 cause the electronic whiteboard 130 to generate different capacitance values and further generate different signal strengths due to the differences caused by the above factors. Therefore, the type of the writing device 200 in contact with the electronic whiteboard 130 may be identified by the strength of the signal generated by the electronic whiteboard 130. In one embodiment, the signal strength interval of the same type of writing device 200 covers the signal strength when the conductive pen barrel 210 is filled with the conductive ink as well as the signal strength when the conductive ink in the conductive pen barrel 210 is just used up, but the disclosure is not limited thereto.

Therefore, referring to FIG. 1A, FIG. 1B and FIG. 2 together, in an embodiment, the first writing device 110 of the electronic whiteboard system 100 includes the first conductive pen barrel (not shown), and the first conductive pen barrel contains the first conductive ink, the first conductive ink is electrically connected to the first conductive pen barrel, the first conductive pen barrel has the first electrical conductivity coefficient, and the first conductive ink has the second electrical conductivity coefficient. The second writing device 120 includes the second conductive pen barrel (not shown), the second conductive pen barrel contains the second conductive ink, the second conductive ink is electrically connected to the second conductive pen barrel, the second conductive pen barrel has the third electrical conductivity coefficient, and the second conductive ink has the fourth electrical conductivity coefficient. The first contact surface 111 contacts the electronic whiteboard 130 to form the first contact area on the electronic whiteboard 130, and generates the first capacitance value corresponding to the first contact area, the first electrical conductivity coefficient, and the second electrical conductivity coefficient. The first capacitance value correspondingly generates the first signal strength. The second contact surface 121 contacts the electronic whiteboard 130 to form the second contact area on the electronic whiteboard 130, and generates the second capacitance value corresponding to the second contact area, the third electrical conductivity coefficient, and the fourth electrical conductivity coefficient. The second capacitance value correspondingly generates the second signal strength, and the first capacitance value is greater than the second capacitance value. The first signal strength and the second signal strength may further respectively cause the display 141 to display the corresponding first color and the second color according to the corresponding relationship between the signal strength interval and the color set in the color correspondence table, so as to achieve the effect of differentiating the touch inputs of different writing devices.

Referring again to FIG. 2, the pen tip 220 may adsorb the conductive ink from the conductive pen barrel 210, and the conductive ink may be desorbed from the pen tip 220 to leave the physical handwriting on the writing surface, and the above adsorption and desorption mechanism is the same as a principle of using the general ink pen to write.

In an embodiment, the writing device 200 further includes a back cap 240, and the pen tip 220 and the back cap 240 are respectively connected to two opposite ends of the conductive pen barrel 210. The back cap 240 is, for example, detachable, and is adapted to be combined with or separated from the conductive pen barrel 210. After the back cap 240 is separated from the conductive pen barrel 210, the conductive ink may be filled in the conductive pen barrel 210. In an embodiment, a material of the back cap 240 includes a conductor.

In an embodiment, the conductive ink may flow in the conductive pen barrel 210, and may form a signal conduction network with the pen tip 220, an internal structure of the conductive pen barrel 210 and/or the back cap 240.

In an embodiment, the writing device 200 may further selectively include a pen cap 230. When the writing device 200 is not used, the pen cap 230 may cover the pen tip 220, such that the conductive ink is less likely to be lost due to volatilization.

FIG. 3 is a flow chart of an operation method according to an embodiment of the disclosure. It should be noted that the operation method in FIG. 3 may be performed by using the electronic whiteboard system 100 of FIG. 1A and FIG. 1B, where the device and components for executing the steps are described above, and thus detailed descriptions thereof are not repeated in the following embodiment.

Referring to FIG. 3, in step S301, the electronic whiteboard 130 receives the touch input of the contact surface of the writing device, and senses the touch input through the capacitive touch sensing array to generate a signal strength and coordinate information corresponding to the touch input.

In step S302, the electronic whiteboard 130 transmits the signal strength and coordinate information to the electronic device 140. In the meantime, returning to step S301, sensing the touch input on the contact surface of the writing device is continued.

In step S303, the electronic device 140 determines the color corresponding to the signal strength according to the color correspondence table.

In step S304, the electronic device 140 displays the touch input on the display 141 in a color corresponding to the signal strength.

FIG. 4 is a flow chart of an operation method according to another embodiment of the disclosure. Likewise, it should be noted that the operation method in FIG. 4 may be performed by using the electronic whiteboard system 100 of FIG. 1A and FIG. 1B, where the device and components for executing the steps are described above, and thus detailed descriptions thereof are not repeated in the following embodiment.

Referring to FIG. 4, in step S401, the electronic whiteboard 130 receives the touch input of the contact surface of the writing device, and senses the touch input through the capacitive touch sensing array to generate a signal strength and coordinate information corresponding to the touch input.

In step S402, the electronic device 140 receives the signal strength and coordinate information corresponding to the touch input.

In step S403, the electronic device 140 calculates the confidence level of the touch input.

In step S404, the electronic device 140 determines whether the confidence level of the touch input is greater than a threshold.

If the confidence level of the touch input is greater than the threshold, in step S405, the touch input is displayed on the display 141 in a preset color (e.g., the first color or the second color) of the corresponding writing device. In the meantime, in step S407, the conversion parameter is calculated according to the influence factor or the historical determining result, to assist the electronic device 140 in determining the color corresponding to the signal strength of the touch input received later.

If the confidence level of the touch input is not greater than the threshold, in step S406, the touch input is displayed on the display 141 in a color (e.g., the third color) other than the preset color of the corresponding writing device.

In summary, the electronic whiteboard system and the operation method of the disclosure receive the touch input of the contact surface of the writing device by the electronic whiteboard and generate the signal strength corresponding to the touch input, and then display the color corresponding to the signal strength on the display by the electronic device. Accordingly, in the case of using a plurality of different writing devices, the effect of differentiating the touch inputs of different writing devices on the display can be further achieved. In addition, the electronic whiteboard system and the operation method of the disclosure can determine the confidence level corresponding to the signal strength, display the preset color of the writing device when the confidence level is sufficient, and temporarily display the neutral color when the confidence level is insufficient, and modify the strokes in neutral color to the corresponding preset color until the confidence level is sufficient, thereby reducing misjudgment. The electronic whiteboard system and the operation method of the disclosure can also calculate the conversion parameters according to the influence factor or the historical determining result, and convert the signal strength through the conversion parameters to achieve the effect of calibrating the signal strength, so as to improve the accuracy of the judgment.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

1. An electronic whiteboard system, comprising an electronic whiteboard (130), an electronic device (140), and a first writing device (110), wherein:
the electronic whiteboard (130) has a capacitive touch function;
the electronic device (140) is coupled to the electronic whiteboard (130), and the electronic device (140) comprises a display (141); and
the first writing device (110) comprises a first contact surface (111), wherein
the electronic whiteboard (130) is configured to receive a first touch input of the first contact surface (111) and to generate a first signal strength corresponding to the first touch input,
the electronic device is configured to display the first touch input on the display (141) in a first color corresponding to the first signal strength.

2. The electronic whiteboard system according to claim 1, further comprising:
a second writing device (120), comprising a second contact surface (121), wherein
the electronic whiteboard (130) is configured to receive a second touch input of the second contact surface (121) and to generate a second signal strength corresponding to the second touch input,
the electronic device (140) is configured to display the second touch input on the display (141) in a second color corresponding to the second signal strength,
wherein a first contact area of the first contact surface (111) on the electronic whiteboard (130) is greater than a second contact area of the second contact surface (121) on the electronic whiteboard (130), and the first signal strength is greater than the second signal strength.

3. The electronic whiteboard system according to claim 2, wherein the first contact surface (111) contacts the electronic whiteboard (130) to generate a first capacitance value corresponding to the first contact area, the first capacitance value is correspondingly configured to generate the first signal strength, the second contact surface (121) contacts the electronic whiteboard (130) to generate a second capacitance value corresponding to the second contact area, the second capacitance value is correspondingly configured to generate the second signal strength, and the first capacitance value is greater than the second capacitance value.

4. The electronic whiteboard system according to claim 3, wherein the first capacitance value falls within a first capacitance strength interval, the second capacitance value falls within a second capacitance strength interval, and the first capacitance strength interval does not overlap the second capacitance strength interval; or wherein the first signal strength falls within a first signal strength interval, the second signal strength falls within a second signal strength interval, and the first signal strength interval does not overlap the second signal strength interval.

5. The electronic whiteboard system according to any one of the claims 2 - 4, wherein the electronic device (140) further comprises a processor (142) and a storage device (143) connected to each other, the storage device (143) has a color correspondence table, the electronic device is configured to determine, by the processor (142), the first color corresponding to the first signal strength and the second color corresponding to the second signal strength according to the color correspondence table.

6. The electronic whiteboard system according to claim 5, wherein the storage device (143) further has a learning program, the processor (142) is configured to utilize the learning program to calculate a conversion parameter according to a plurality of influence factors or historical determining results, the electronic device (140) is configured to determine, by the processor (142), the first color corresponding to the first signal strength and the second color corresponding to the second signal strength according to the color correspondence table and the conversion parameter.

7. The electronic whiteboard system according to any one of the claims 2 - 6, wherein the electronic whiteboard (130) comprises a capacitive touch sensing array to sense the first touch input and the second touch input, and to generate a first capacitance value corresponding to the first touch input and a second capacitance value corresponding to the second touch input.

8. The electronic whiteboard system according to any one of the claims 2 - 7, wherein the electronic whiteboard (130) is configured to generate a first coordinate information corresponding to the first touch input when receiving the first touch input of the first contact surface (111), and/or the electronic whiteboard (130) is configured to generate a second coordinate information corresponding to the second touch input when receiving the second touch input of the second contact surface (121).

9. The electronic whiteboard system according to any one of the claims 2 - 8, wherein:
the electronic whiteboard (130) is configured to sequentially receive a plurality of continuous third touch inputs of the first contact surface (111), and to generate a plurality of third signal strengths corresponding to the plurality of third touch inputs,
the electronic device (140) further comprises a processor (142) and a storage device (143) connected to each other, the storage device (143) has a confidence level calculating program, the processor (142) is configured to utilize the confidence level calculating program and to calculate a plurality of continuous confidence levels corresponding to the plurality of third signal strengths and corresponding to the plurality of third touch inputs according to the plurality of third signal strengths.

10. The electronic whiteboard system according to claim 9, wherein
the electronic device (140) is configured to determine the plurality of confidence levels corresponding to the plurality of third signal strengths according to a first signal strength interval corresponding to the first color and a second signal strength interval corresponding to the second color,
when one of the plurality of confidence levels is greater than a threshold, the electronic device is configured to display one of the plurality of third touch inputs corresponding to the one of the plurality of confidence levels on the display in the first color or the second color,
when one of the plurality of confidence levels is not greater than the threshold, the electronic device is configured to display one of the plurality of third touch inputs corresponding to the one of the plurality of confidence levels on the display in a third color different from the first color and the second color.

11. The electronic whiteboard system according to claim 10, wherein
the electronic whiteboard (130) is configured to receive a fourth touch input after the plurality of third touch inputs and to generate a fourth signal strength corresponding to the fourth touch input, and the processor (142) is configured to utilize the confidence level calculating program and to calculate an index confidence level corresponding to the fourth signal strength and corresponding to the plurality of fourth touch inputs according to the fourth signal strength,
when the electronic device (140) displays the plurality of third touch inputs corresponding to the plurality of confidence levels on the display (141) in the third color, and the index confidence level corresponding to the fourth signal strength is greater than the threshold, the electronic device is configured to display the fourth touch input corresponding to the index confidence level on the display (141) in the first color or the second color, and the electronic device (140) is configured modify the third color of the plurality of third touch inputs displayed on the display into the same color as the color of the fourth touch input displayed on the display.

12. The electronic whiteboard system according to any one of the claims 2 - 11, wherein the first writing device (110) comprises a first conductive pen barrel, and the first conductive pen barrel contains a first conductive ink, the first conductive ink is electrically connected to the first conductive pen barrel, the first conductive pen barrel has a first electrical conductivity coefficient, the first conductive ink has a second electrical conductivity coefficient, the second writing device (200) comprises a second conductive pen barrel (210), the second conductive pen barrel (210) contains a second conductive ink, the second conductive ink is electrically connected to the second conductive pen barrel (210), the second conductive pen barrel (210) has a third electrical conductivity coefficient, the second conductive ink has a fourth electrical conductivity coefficient, the first contact surface (111) contacts the electronic whiteboard (130) to generate a first capacitance value corresponding to the first contact area (111), the first electrical conductivity coefficient and the second electrical conductivity coefficient, the first capacitance value is correspondingly configured to generate the first signal strength, the second contact surface (211) contacts the electronic whiteboard (130) to correspondingly generate a second capacitance value corresponding to the second contact area (121), the third electrical conductivity coefficient and the fourth electrical conductivity coefficient, the second capacitance value is correspondingly configured to generate the second signal strength, and the first capacitance value is greater than the second capacitance value.

13. An operation method used for an electronic whiteboard (130), an electronic device (140), and a first writing device (110), the electronic whiteboard (130) has a capacitive touch function, the electronic device (140) is coupled to the electronic whiteboard (130) and the electronic device (140) comprises a display (141), the first writing device (110) comprises a first contact surface (111), and the operation method comprises:
receiving, by the electronic whiteboard (130), a first touch input of the first contact surface (111) and generating a first signal strength corresponding to the first touch input; and
displaying, by the electronic device (140), the first touch input on the display (141) in a first color corresponding to the first signal strength.

14. The operation method according to claim 13, further comprising:
receiving, by the electronic whiteboard (130), a second touch input of a second contact surface (121) of a second writing device (210) and generating a second signal strength corresponding to the second touch input; and
displaying, by the electronic device (140), the second touch input on the display (141) in a second color corresponding to the second signal strength,
wherein a first contact area of the first contact surface (111) on the electronic whiteboard (130) is greater than a second contact area of the second contact surface (121) on the electronic whiteboard (130), and the first signal strength is greater than the second signal strength.

15. The electronic whiteboard system according to any one of the claims 2 -12 or the operation method according to claim 14, wherein the first color is different from the second color.
